# EUROPÄISCHE PATENTSCHRIFT

(11) **EP 3 354 536 B1**
(45) Veröffentlichungstag und Bekanntmachung des Hinweises auf die Patenterteilung: **06.03.2024**
(21) Anmeldenummer: 17208286.9
(22) Anmeldetag: 19.12.2017
(51) Int. Cl.: B62B 3/14

(54) **STAPELBARER EINKAUFSWAGEN**
NESTABLE SHOPPING TROLLEY
CHARIOT LIBRE-SERVICE IMBRICABLE

(30) Priorität: 25.01.2017 DE 102017101472
(43) Veröffentlichungstag der Anmeldung: 01.08.2018
(73) Patentinhaber: Wanzl GmbH & Co. KGaA, 89340 Leipheim (DE)
(72) Erfinder: Eichele, Hermann, 89340 Leipheim (DE); Gasche, Thomas, 89340 Leipheim (DE); Losert, Manfred, 89340 Leipheim (DE); Gerstmaier, Michael, 89441 Medlingen (DE)

(56) Entgegenhaltungen:
- EP-A2- 0 905 004
- DE-A1-102004 031 237
- DE-A1-102006 034 048
- DE-U1- 9 402 744
- DE-U1- 29 613 568

## Beschreibung

Die Erfindung betrifft einen stapelbaren Einkaufswagen mit einer Schiebeeinrichtung gemäß den Merkmalen des Oberbegriffs des Hauptanspruchs.

Die DE 296 13 568 U1 zeigt einen Einkaufswagen mit einer solchen Ablage. Und auch in der DE 94 02 744.7 U1 ist ein Einkaufswagen mit einer schiebebeweglichen Ablage offenbart.

Zum nächstliegenden Stand der Technik zählen Einkaufswagen, die in der europäischen Patentschrift EP 0 905 004 B1 beschrieben sind. Um die Schiebebeweglichkeit des vorderen Abschnittes des Abstellteiles zu ermöglichen, liegen diese auf den Trägern des Fahrgestells auf.

In der vorderen Nichtgebrauchslage liegen dabei die Elemente der Ablage im Bereich der horizontalen Achse zwischen dem Schwenkteil und dem hinteren Bereich des Abstellteils in stabilem Gleichgewicht gegen einen Bereich des Fahrgestells an. Dies kann beim Fahren störendes Klappern erzeugen und dabei die Kontaktstelle in ihrer Oberfläche beschädigen, was wiederum an dieser Stelle vergrößerte Korrosionsanfälligkeit bewirken kann.

Ausgehend von diesem Stand der Technik besteht die Aufgabe der Erfindung darin, einen gattungsgemäßen Einkaufswagen so weiterzuentwickeln, dass in der Nichtgebrauchslage auf zusätzliche Abstützungen der Elemente der Ablage am Fahrgestell verzichtet werden kann, indem - außer dem Aufliegen auf der Führung und der Lagerung des Schwenkteils am Fahrgestell - die Ablage das Fahrgestell nicht berührt.

Die Lösung der Aufgabe erfolgt gemäß den Merkmalen von Anspruch 1. Bevorzugte Ausführungen sind in den abhängigen Ansprüchen definiert.

Dies ermöglicht es, dass in der Nichtgebrauchslage, außer dem arretierten Aufliegen auf der Führung und der Lagerung des Schwenkteils am Fahrgestell, die Ablage das Fahrgestell nicht berührt, weil die Arretierung - auch ohne weitere Lagerung gegen zum Beispiel das Fahrgestell - die Ablage im stabilen Gleichgewicht in der Nichtgebrauchslage hält. Gemäß Anspruch 1 ist die Arretierung formschlüssig. Sie kann aber auch kraftschlüssig sein zum Beispiel mittels Magnet oder Keilwirkung. Formschlüssig kann die Arretierung zum Beispiel durch einen Gleiter (oder eine Rolle) etwa am vorderen Abschnitt des Abstellteiles gebildet sein, der in der Nichtgebrauchslage in eine Vertiefung fällt. Die Vertiefung ist v-förmig, so dass durch etwas kräftigeres Ziehen von Hand etwa am Abstellteil nach hinten der Gleiter aus der Arretierungsvertiefung herausgezogen wird.

Die Führung ist von einer Schiene, mit der v-förmigen Vertiefung darin integriert, gebildet, die etwa aus gebogenem Stab, insbesondere Rundstab, zum Beispiel links und rechts je an einem Träger des Fahrgestells angeschweißt sein kann. Eine Kontur eines nicht erfindungsgemäßen Fahrgestells kann aber auch selbst die Führung bilden und dann nur die Arretierung am Fahrgestell angebracht sein, etwa in Gestalt einer Vertiefung (etwa einer von oben in einen Träger des Fahrgestells hinein geformten, zum Beispiel v-förmigen Ausnehmung) und/oder eines Magneten - und/oder einer Federspange oder Keilkontur, die zum Beispiel Gleiter oder Rolle kraftschlüssig arretieren.

Das Abstellteil liegt auf der Führung an den Trägern auf und kann nach oben angehoben werden (insbesondere beim ineinander Schieben der Einkaufswagen), und so ist jener Raum, der das Anheben ermöglicht, nach unten und nach hinten durch die Träger und nach oben durch den Korb begrenzt. Dadurch kann das Abstellteil, z.B. in missbräuchlicher Absicht nicht in eine Lage gebracht werden, in welcher die Funktion der Ablage beeinträchtigt oder eine Beschädigung möglich wäre. Die Begrenzung des genannten Raumes durch die Träger und den Korb, durch Teile also, die sowieso vorhanden sind, bedeutet deshalb einen weiteren möglichen Vorteil der Erfindung.

Die Erfindung wird anhand von Ausführungsbeispielen näher erläutert. Es zeigt
- Fig. 1 bis Fig. 5: verschiedene Ausführungsbeispiele anhand unterschiedlicher Fahrgestelle, wobei nur die Figuren 2a und 2b erfindungsgemäße Fahrgestelle zeigen, sowie
- Fig. 6: eine Draufsicht auf einen Abschnitt eines Fahrgestelles.

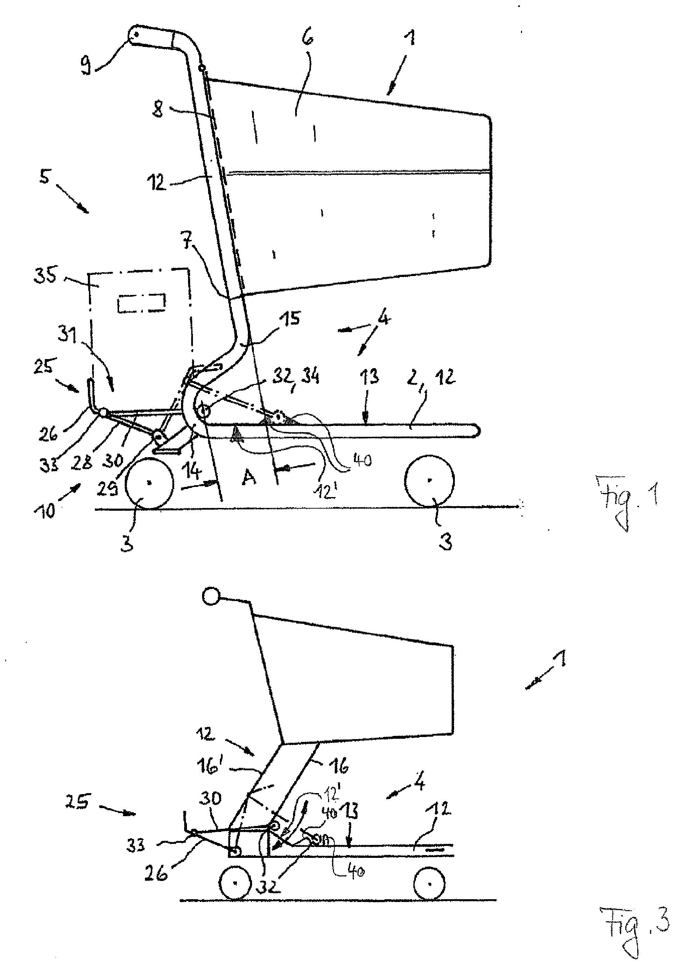

Die in **Fig. 1 bis 6** gezeigten Einkaufswagen 1 weisen folgende gemeinsame Merkmale auf: Die Einkaufswagen 1 haben ein mit Fahrrollen 3 ausgestattetes Fahrgestell 2, dessen Längsseiten 4 durch ein- oder mehrteilige Träger 12 gebildet sind. Die üblicherweise durch wenigstens eine Querverbindung verbundenen Träger 12 tragen bevorzugt an ihrer höchsten Erhebung einen Korb 6, der sich üblicherweise in Schieberichtung des Einkaufswagens 1 verjüngt. Das rückwärtige offene Ende des Korbes 6 ist in bekannter Weise durch eine schwenkbare Klappe 8 verschließbar, so dass es möglich ist, gleiche Einkaufswagen 1 platzsparend ineinanderzuschieben, also zu stapeln. Gewöhnlich ist am Korb 6 eine Schiebeeinrichtung 9 in Form eines Handgriffes vorgesehen, wobei dieser auch am Fahrgestell 2 angeordnet sein kann. Im hinteren Bereich 5 eines jeden Einkaufswagens 1 ist eine aus einem Schwenkteil 26 und aus einem Abstellteil 30 gestaltete Ablage 25 vorgesehen, die nach rückwärts in eine Gebrauchslage und umgekehrt bewegbar ist, wobei das Schwenkteil 26 um eine horizontale Achse 29 am rückwärtigen Ende 10 des Fahrgestelles 2 begrenzt schwenkbar gelagert ist und wobei die Lagerung der zum Schwenkteil 26 gehörenden Stützen 28 mit großzügigem Spiel so gewählt sein kann, dass sich das Schwenkteil 26 auch quer zur Achse 29 eine gewisse Wegstrecke anheben und absenken lässt. Das Abstellteil 30 ist mit seinem hinteren Bereich 31 um eine horizontale Achse 33 schwenkbar am Schwenkteil 26 angelenkt, während am vorderen Abschnitt 32 des Abstellteiles 30 zwei nicht näher dargestellte Stützmittel 34, etwa Rollen, Gleiter, Vorsprünge und/oder dergleichen vorgesehen sind, die auf Führungen 12' an den Trägern 12 des Fahrgestelles 2 aufliegend schiebebeweglich abgestützt sind. Die horizontalen Achsen 29 und 33 sind quer zur Schieberichtung des Einkaufswagens angeordnet. Die Ablagen 25 sind bei allen Ausführungsbeispielen in Gebrauchslage durchgehend und in Nichtgebrauchslage strichpunktiert gezeichnet. Beim Ausführungsbeispiel gemäß Fig. 1 ist als größerer Gegenstand 35 eine auf der Ablage 25 abgestellte Getränkekiste eingezeichnet.

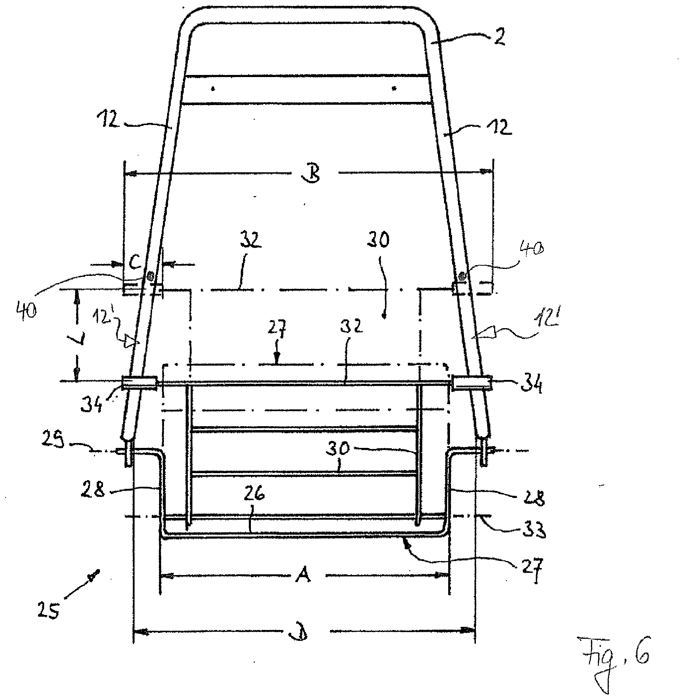

Bei dem in **Fig. 1** gezeigten Einkaufswagen 1 sind die Längsseiten 4 des Fahrgestelles 2 durch zwei rohrförmige Träger 12 gebildet, die vorne ineinander übergehend ein Teil bilden. Die Träger 12 weisen einen horizontalen unteren Abschnitt 13 auf, der einer Krümmung 14 folgend im hinteren Bereich 5 des Einkaufswagens 1 nach oben strebt, anschließend in eine entgegengesetzte Krümmung 15 übergeht und dann schräg nach oben und nach hinten weitergeführt ist, wobei die oberen Enden der beiden Träger 12 die Schiebeeinrichtung 9 tragen. Die Zeichnung zeigt deutlich, dass das Abstellteil 30 mit seinem vorderen Abschnitt 32 auf den Trägern 12 aufliegt, sich also auf den Trägern 12 abstützt - die also die Führungen 12' bilden - und dass in Gebrauchslage der Ablage 25 die Krümmung 14 der beiden Träger 12 je einen Anschlag für den vorderen Abschnitt 32 des Abstellteiles 30 bilden, so dass die Ablage 25 nicht mehr weiter nach hinten hinaus bewegt werden kann. Beim Schwenken der Ablage 25 gleitet der vordere Abschnitt 32 des Abstellteiles 30 auf den Trägern 12 als Führungen 12' in Längsrichtung des Einkaufswagens 1 hin und her. Die dabei zurückgelegte Wegstrecke (Maß L, siehe Fig. 6), wird aus der Zeichnung aus den beiden Positionen (Gebrauchslage/Nichtgebrauchslage) des vorderen Abschnittes 32 des Abstellteiles 30 ersichtlich. Im Beispiel von **Fig. 1** ist der vordere Abschnitt 32 des Abstellteiles 30 in Gebrauchslage der Ablage 25 in einem Abstand A zum hinteren unteren Rand 7 des Korbes 6 zurückversetzt.

Beim Schwenken der Ablage 25 nach vorn in die Nichtgebrauchslage bewegt sich der vordere Abschnitt 32 des Abstellteiles 30 auf den Trägern 12 - die also Führungen 12' bilden - in die Nichtgebrauchslage und in die Vertiefung zwischen den zwei Arretierungswangen 40 hinein, in der, formschlüssig gehalten, die Ablage 25 insgesamt sich mit ihren Elementen 26, 30 in der Nichtgebrauchslage ohne weitere Abstützung am Fahrgestell im stabilen Gleichgewicht hält.

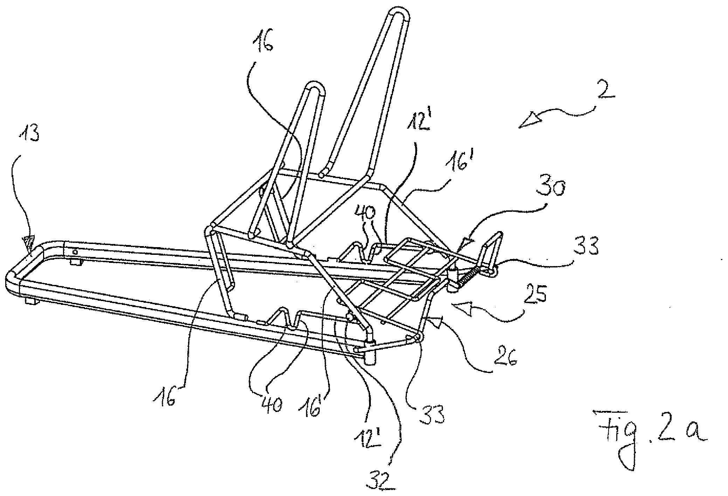

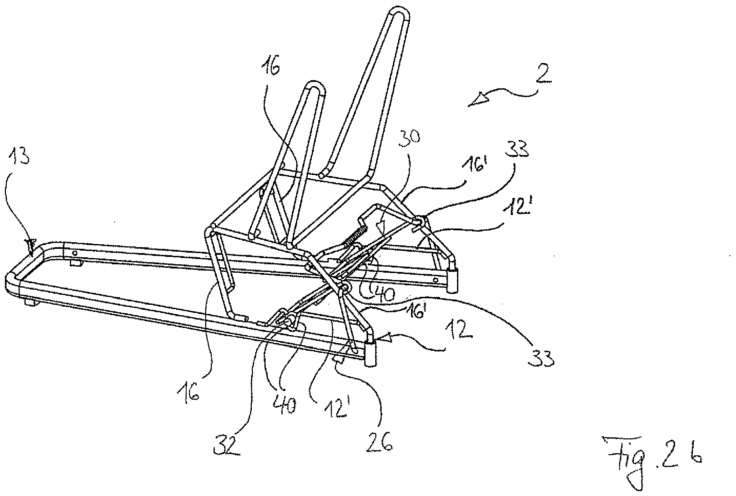

In **Fig. 2** **a** und **Fig. 2** **b** ist nur das Fahrgestell 2 (ohne Rollen) eines Einkaufswagens gezeigt. Auch hier weisen die Längsseiten 4 des Fahrgestelles 2 zwei rohrförmige Träger 13 auf, die vorne ineinander übergehend ein u-förmiges Teil 13 bilden. Das Fahrgestell 2 hat ferner je zwei nach oben gerichtete weitere Abschnitte 16, 16' der Träger 12. Der vordere Abschnitt 32 des Abstellteiles 30 liegt hier nicht wie gemäß **Fig. 1** auf den horizontalen Abschnitten 13 der Träger 12 auf, sondern auf Führungen 12' aus gebogenem Rundstab, der links und rechts jeweils am Fahrgestell 2 oberhalb des Trägers 12 angeschweißt ist. In Gebrauchslage schlagen in dieser Ausgestaltung die Abschnitte 32 an die hinteren (16') der paarweise nach oben gerichteten Abschnitte 16, 16' der Träger 12 an, und zwar in einem spitzen Winkel (zwischen Führung 12' und nach oben gerichtetem Abschnitt 16') dort, wo die linke und die rechte Führung 12' jeweils mit ihrem hinteren Ende am linken und rechten hinteren, nach oben gerichteten Abschnitt 16' der Träger 12 des Fahrgestell 2 angeschweißt ist - so dass dadurch die Gebrauchslage der Ablage 25 bestimmt ist.

Beim Schwenken der Ablage 25 nach vorn in die Nichtgebrauchslage (**Fig. 2** **b**) bewegt sich der vordere Abschnitt 32 des Abstellteiles 30 auf den Führungen 12' in die Nichtgebrauchslage und in eine v-förmige Vertiefung zwischen den zwei Arretierungswangen 40 hinein, die integral in den Verlauf der aus dem Rundstab gebogenen Führung 12', hineingeformt sind. In der Arretierung 40 wiederum, formschlüssig gehalten, hält die Ablage 25 insgesamt sich mit ihren Elementen 26, 30 in der Nichtgebrauchslage ohne weitere Abstützung am Fahrgestell im stabilen Gleichgewicht. Auch die horizontale Achse 33 stützt sich in dieser Position nicht, wie es in Fig 2 b scheinen mag, am hinteren nach oben gerichteten Abschnitt 16' ab, sondern ist nur dicht darüber positioniert.

Erst wenn etwa beim Stapeln mehrerer Einkaufswagen (nicht dargestellt) der vordere Teil 13 des Fahrgestells 2 die vorderen Abschnitte 32 des Abstellteiles 30 von den Führungen 12' und aus den v-förmigen Vertiefungen 40 herausgehoben werden sollten, können die horizontalen Achsen 33 sich am hinteren nach oben gerichteten Abschnitt 16' abstützen und so auf diese Weise die Ablage 25 insgesamt mit ihren Elementen 26, 30 in der Nichtgebrauchslage mit dann dieser Abstützung am Fahrgestell im stabilen Gleichgewicht halten.

Die Längsseiten 4 des Fahrgestelles 2 des in **Fig. 3** gezeigten Einkaufswagens 1 sind durch je einen horizontalen unteren Abschnitt 13 der Träger 12 sowie durch je zwei nach oben gerichtete weitere Abschnitte 16, 16' der Träger 12 gebildet. Der vordere Abschnitt 32 des Abstellteiles 30 liegt auf den horizontalen Abschnitten 13 der Träger 12 - die also wiederum die Führungen 12' bilden - auf. In Gebrauchslage schlagen die Abschnitte 32 an die vorderen (16) der paarweise nach oben gerichteten Abschnitte 16, 16' der Träger 12 an, so dass dadurch die Gebrauchslage der Ablage 25 bestimmt ist. Beim Schwenken der Ablage 25 nach vorn in die Nichtgebrauchslage bewegt sich der vordere Abschnitt 32 des Abstellteiles 30 auf den Trägern 12 - die also wiederum Führungen 12' bilden - in die Nichtgebrauchslage und in die Vertiefung zwischen den zwei Arretierungswangen 40 hinein, in der, formschlüssig gehalten, die Ablage 25 insgesamt sich mit ihren Elementen 26, 30 in der Nichtgebrauchslage ohne weitere Abstützung am Fahrgestell im stabilen Gleichgewicht hält.

In der Zeichnung ist im Bereich des in Nichtgebrauchslage befindlichen Abstellteiles 30 ein Doppelpfeil eingezeichnet. Dieser Pfeil verdeutlicht, dass das Abstellteil 30 um die am Schwenkteil 26 gelegene horizontale Achse 33 schwenkbar ein Stück weit nach oben anhebbar ist - und zwar aus der Arretierung 40 nach oben hinaus. Dieses Merkmal lässt sich auf alle hier vorgestellten Einkaufswagen 1 übertragen. Der Raum, der ein Anheben des Abstellteiles 30 oder besser des vorderen Abschnittes 32 ermöglicht, ist nach unten und nach hinten durch die Träger 12 und nach oben durch den Korb 6 begrenzt. Ein Anheben des Abstellteiles 30 ist, abgesehen von geringem Spiel, nur möglich, so lange sich die Ablage 25 nicht in ihrer Gebrauchslage befindet.

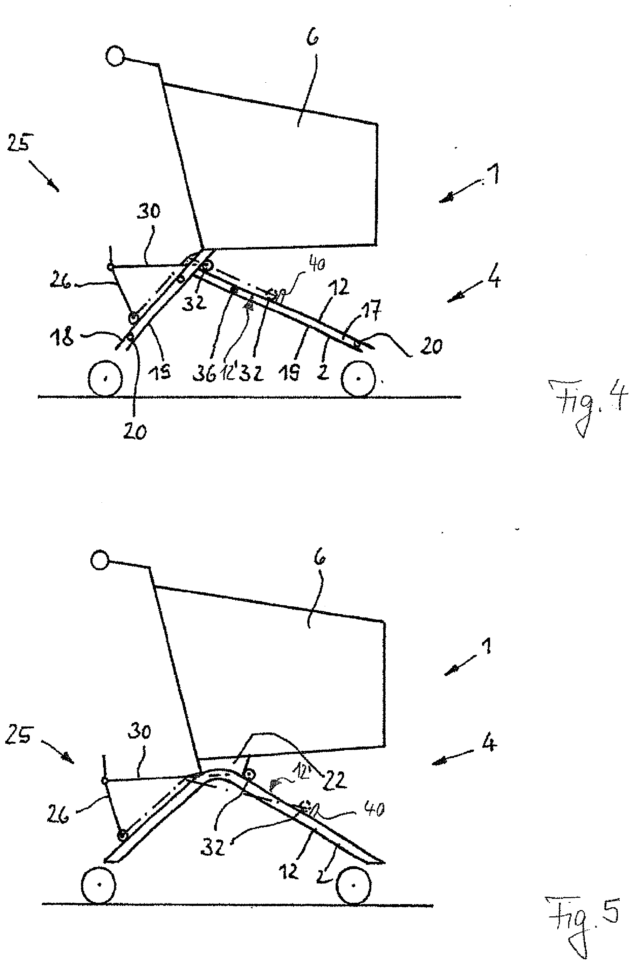

Bei dem in **Fig. 4** dargestellten Einkaufswagen 1 sind die Träger 12, welche die Längsseiten 4 des Fahrgestelles 2 bilden, durch je einen nach hinten ansteigenden Abschnitt 17 und durch je einen in Schieberichtung des Einkaufswagens 1 steil ansteigenden Abschnitt 18 gebildet, wobei der steile Abschnitt 18 ortsfest mit dem Abschnitt 17 verbunden ist und den Korb 6 trägt. Die Abschnitte 17, 18 sind durch auf Abstand gehaltene Stababschnitte 19 gebildet, die über geeignete Zwischenstücke 20 verbunden sind. Der vordere Abschnitt 32 des Abstellteiles 30 ist auf den so gebildeten Trägern 12 anhebbar abgestützt. In Gebrauchslage der Ablage 25 schlägt der vordere Abschnitt 32 des Abstellteiles 30 an die jeweils vorderen der gezeigten Stababschnitte 19 des steilen Abschnittes 18 an. Beim Schwenken der Ablage 25 bewegt sich der vordere Abschnitt 32 des Abstellteiles 30 auf den oben gelegenen Stababschnitten 19 der beiden Abschnitte 17 - die also nach vorn unten geneigte Führungen 12' bilden - nach vorn unten in die Nichtgebrauchslage und in die Arretierung 40 hinein, gegen die abgestützt die Ablage sich mit ihren Elementen 26, 30 in der Nichtgebrauchslage ohne weitere Abstützung am Fahrgestell im stabilen Gleichgewicht hält.

Bei diesem Ausführungsbeispiel sind die beiden die Längsseiten 4 des Fahrgestelles 2 bildenden Träger 12 durch eine Querstrebe 36 verbunden. Die Querstrebe 36 ist zwischen den Stababschnitten 19 der Träger 12 eingefügt und mit diesen verschweißt. Die Querstrebe 36 befindet sich unterhalb der Wegstrecke, welche der vordere Abschnitt 32 des Abstellteiles 30 beim Schwenken der Ablage 25 durchmisst. Da sich die Querstrebe 36 unterhalb dieser Wegstrecke befindet, stößt sie nicht an das Abstellteil 30 an. Die Querstrebe 36 dient der Erhöhung der Stabilität des Fahrgestelles 2.

**Fig. 5** zeigt einen Einkaufswagen 1, bei dem die Längsseiten 4 des Fahrgestelles 2 durch je einen aus Rohr bestehenden, nach oben gekrümmten Träger 12 gebildet sind. Der vordere Bereich 32 des Abstellteiles 30 liegt auf den Trägern 12 auf und ist, ebenfalls am Schwenkteil 26 anhebbar gelagert, auf den Trägern 12 abgestützt - die wiederum nach vorn unten geneigte Führungen 12' bilden. In Gebrauchslage liegt der vordere Abschnitt 32 des Abstellteiles 30 an zwei Korbstützteilen 22 an, die Bestandteil der Träger 12 sind. Beim Schwenken der Ablage 25 in die Nichtgebrauchslage bewegt sich der vordere Abschnitt 32 des Abstellteiles 30 auf den Trägern 12 - die wiederum nach vorn unten geneigte Führungen 12' bilden - nach vorn unten in die Nichtgebrauchslage und in die Arretierung 40 hinein, gegen die abgestützt die Ablage sich mit ihren Elementen 26, 30 in der Nichtgebrauchslage wiederum ohne weitere Abstützung am Fahrgestell im stabilen Gleichgewicht hält.

In einer Draufsicht zeigt **Fig. 6** in schematisch dargestellter Weise ein Fahrgestell 2 mit daran angeordneter Ablage 25. Das Schwenkteil 26 ist mit seinen Stützen 28 um die horizontale Achse 29 am Fahrgestell 2, an oder nahe den Trägern 12 bewegbar gelagert. Vom Schwenkteil 26 aus erstreckt sich das am Schwenkteil 26 angelenkte Abstellteil 30 nach vorne und ist mit seinem vorderen Abschnitt 32 auf den Trägern 12 als Führung 12' abgestützt. Die dazu erforderlichen Stützmittel 34 sind aus gleitfähigem Kunststoff gefertigt. Die Stützmittel 34 sind so lang gestaltet, Maß C, dass sie sich in Gebrauchs- und in Nichtgebrauchslage immer auf den in Schieberichtung des Einkaufswagens 1 konisch zulaufenden Trägern 12 abstützen. Damit die Ablage 25 in Nichtgebrauchslage möglichst wenig Platz beansprucht, sind die einzelnen Anlenkpunkte von Fahrgestell 2, Schwenkteil 26 und Abstellteil 30 so gewählt, dass zumindest ein Teil der oberen Querverbindung 27 des Schwenkteiles 26, welche bevorzugt auch den rückwärtigen Anschlag für einen auf die Ablage 25 gestellten Gegenstand 35 bildet, innerhalb des Grundrisses des Abstellteiles 30 angeordnet ist. Da die Breite A der oberen Querverbindung 27 des Schwenkteiles 26 so gewählt ist, dass nicht nur das Abstellteil 30, sondern auch das Schwenkteil 26 zwischen den Trägern 12 bewegbar ist, liegt das Schwenkteil 26 - bei gestapeltem Wagen und angehobenem Abstellteil 30 - in Nichtgebrauchslage der Ablage 25 auf dem Abstellteil 30 auf, so dass zwischen dem Schwenkteil 26 und dem Abstellteil 30 eine Selbsthemmung eintritt, und das Schwenkteil 26 nicht mehr weiter bewegt werden kann. Es sind deshalb nicht unbedingt gesonderte Anschläge erforderlich, die den Bewegungsbereich des Schwenkteiles 26 in der Nichtgebrauchslage der Ablage 25 begrenzen müssten. Die außen gemessene Breite B des vorderen Abschnittes 32 des Abstellteiles 30 ist größer als die größte innen gemessene Distanz D der Träger 12. Dadurch ist sichergestellt, dass das Abstellteil 30 in Gebrauchslage der Ablage 25 immer eine ausreichende Abstützung an den Trägern 12 erhält.

Der vordere Abschnitt 32 des Abstellteiles 30 muss nicht unbedingt die vordere Begrenzung des Abstellteiles 30 sein. Er kann entweder noch weiter vorne in einem Abstand zur Stellfläche des Abstellteiles 30 angeordnet oder zurückversetzt auf Höhe der Stellfläche des Abstellteiles 30 vorgesehen sein. Die jeweilig passende Anordnung hängt vielmehr von der Gestaltung der Träger 12 und damit des Fahrgestelles 2 ab.

Es ist im Übrigen unerheblich, ob die durch das Maß L definierte Wegstrecke, welche der vordere Abschnitt 32 des Abstellteiles 30 beim Schwenken der Ablage 25 auf den Trägern 12 zurücklegt, horizontal und/oder ansteigend oder abfallend angeordnet ist. Bei einem ansteigenden Verlauf z.B. nimmt auch eine in Nichtgebrauchslage befindliche Ablage 25 eine ansteigende, platzsparende Lage ein, so dass sie nicht oder nur unwesentlich in den unterhalb des Korbes 6 befindlichen Bereich ragt. Dies ist beispielsweise dann von Nutzen, wenn sich unterhalb des Korbes 6 am Fahrgestell 2 eine zusätzliche Abstelleinrichtung befindet, die dann ohne dass die Ablage 25 stört, ebenfalls mit Ware beladen werden kann.

## Patentansprüche

1. Stapelbarer Einkaufswagen (1), mit einer Schiebeeinrichtung (9) und mit einem mit Fahrrollen (3) ausgestatteten Fahrgestell (2), dessen Längsseiten (4) durch ein- oder mehrteilige Träger (12) gebildet sind, wobei die Träger (12) einen horizontalen unteren Abschnitt (13) aufweisen,
wobei die Träger (12) einen in Schieberichtung sich verjüngenden Korb (6) tragen, dessen rückwärtiges Ende durch eine Klappe (8) verschließbar ist, wobei im hinteren Bereich (5) des Einkaufswagens (1) eine zum Abstellen größerer Gegenstände bestimmte Ablage (25) vorgesehen ist, die aus einer Nichtgebrauchslage in eine rückwärtige Gebrauchslage und umgekehrt bewegbar ist und die ein Schwenkteil (26) und ein Abstellteil (30) aufweist, wobei das Schwenkteil (26) um eine horizontale Achse (29) schwenkbar am Fahrgestell (2) gelagert ist und wobei das Abstellteil (30) mit seinem vorderen Abschnitt (32) schiebebeweglich geführt auf einer Führung (12') an den Trägern (12) aufliegt und mit seinem hinteren Bereich (31) um eine horizontale Achse (33) schwenkbar mit dem Schwenkteil (26) verbunden ist, wobei das Abstellteil (30) mit seinem vorderen Abschnitt (32) in der Nichtgebrauchslage gegen horizontales Verschieben lösbar arretiert ist,
wobei die Führung (12') von einer Schiene mit einer v-förmigen Vertiefung (40) gebildet ist und die Arretierung (40) formschlüssig ist,
**dadurch gekennzeichnet, dass**
der vordere Abschnitt (32) des Abstellteiles (30), mit Ausnahme in der Gebrauchslage der Ablage (25), anhebbar auf der Führung (12') abgestützt ist und die Führung (12') oberhalb des horizontalen unteren Abschnitts (13) angeordnet ist.

2. Stapelbarer Einkaufswagen nach Anspruch 1, **dadurch gekennzeichnet, dass** die Arretierung (40) durch einen Gleiter und/oder eine Rolle am vorderen Abschnitt (32) des Abstellteiles (30), gebildet ist, der in der Nichtgebrauchslage in die Vertiefung (40) fällt.

3. Stapelbarer Einkaufswagen nach einem der vorhergehenden Ansprüche, **dadurch gekennzeichnet, dass** der zum Anheben des vorderen Abschnittes (32) vorhandene Raum nach unten und nach rückwärts durch die Träger (12) und nach oben durch den Korb (6) begrenzt ist.

4. Stapelbarer Einkaufswagen nach einem der vorhergehenden Ansprüche, **dadurch gekennzeichnet, dass** die Träger (12) in Gebrauchslage der Ablage (25) einen Anschlag für das Abstellteil (30) bilden.

5. Stapelbarer Einkaufswagen nach einem der vorhergehenden Ansprüche, **dadurch gekennzeichnet, dass** in Gebrauchslage der Ablage (25) der vordere Abschnitt (32) des Abstellteiles (30) in einem Abstand (A) * vom hinteren unteren Rand (7) des Korbes (6) zurückversetzt ist.

6. Stapelbarer Einkaufswagen nach einem der vorhergehenden Ansprüche, **dadurch gekennzeichnet, dass** die Breite der oberen Querverbindung (27) des Schwenkteiles (26) so gewählt ist, dass das Schwenkteil (26) zwischen den Trägern (12) bewegbar ist.

7. Stapelbarer Einkaufswagen nach einem der vorhergehenden Ansprüche, **dadurch gekennzeichnet, dass** in Nichtgebrauchslage der Ablage (25) zumindest ein Teil der oberen Querverbindung (27) des Schwenkteiles (26) innerhalb des Grundrisses des Abstellteiles (30) angeordnet ist.

## Claims

1. Stackable shopping trolley (1) having a pushing device (9), and having a chassis (2) which is equipped with castors (3) and whose longitudinal sides (4) are formed by single- or multi-part carriers (12), wherein the carriers (12) have a horizontal lower section (13), wherein the carriers (12) carry a basket (6) which narrows in the pushing direction and whose rear end is able to be closed off by a flap (8), wherein, in the rear region (5) of the shopping trolley (1), provision is made of a shelf (25) which is intended for set-down of relatively large objects and which is movable from a non-use position into a rear use position and the other way round and which has a pivoting part (26) and a set-down part (30), wherein the pivoting part (26) is mounted on the chassis (2) so as to be pivotable about a horizontal axis (29), and wherein the set-down part (30) bears with its front section (32) on a guide (12') on the carriers (12) so as to be guided in a slidably movable manner and is connected at its rear region (31) to the pivoting part (26) so as to be pivotable about a horizontal axis (33), wherein the set-down part (30) is releasably arrested against horizontal displacement with its front section (32) in the non-use position, wherein the guide (12') is formed by a rail with a V-shaped depression (40), and the arresting (40) is form-fitting, **characterized in that** the front section (32) of the set-down part (30), apart from in the use position of the shelf (25), is supported on the guide (12') in a liftable manner, and the guide (12') is arranged above the horizontal lower section (13).

2. Stackable shopping trolley according to Claim 1, **characterized in that** the arresting (40) is formed by a slider and/or a roll on the front section (32) of the set-down part (30), which, in the non-use position, drops into the depression (40).

3. Stackable shopping trolley according to either of the preceding claims, **characterized in that** the space available for lifting the front section (32) is delimited downwards and rearwards by the carriers (12) and upwards by the basket (6).

4. Stackable shopping trolley according to one of the preceding claims, **characterized in that** the carriers (12) form a stop for the set-down part (30) in the use position of the shelf (25).

5. Stackable shopping trolley according to one of the preceding claims, **characterized in that** the front section (32) of the set-down part (30) is set back by a distance (A) from the rear lower edge (7) of the basket (6) in the use position of the shelf (25) .

6. Stackable shopping trolley according to one of the preceding claims, **characterized in that** the width of the upper transverse connection (27) of the pivoting part (26) is selected in such a way that the pivoting part (26) is movable between the carriers (12).

7. Stackable shopping trolley according to one of the preceding claims, **characterized in that** at least a part of the upper transverse connection (27) of the pivoting part (26) is arranged within the outline of the set-down part (30) in the non-use position of the shelf (25).

## Revendications

1. Chariot de courses empilable (1) comprenant un dispositif de poussée (9) et un cadre roulant (2) qui est équipé de roulettes (3) et dont les côtés longitudinaux (4) sont formés par des supports (12) en une partie ou en plusieurs parties, les supports (12) comportant une portion inférieure horizontale (13),
les supports (12) portant un panier (6) qui se rétrécit dans le sens de poussée et dont l'extrémité arrière peut être fermée par un rabat (8), un réceptacle (25) qui est destiné à recevoir des objets plus grands et qui peut être déplacé d'une position de non-utilisation à une position d'utilisation arrière et inversement et qui comporte une partie pivotante (26) et une partie de réception (30), étant prévu dans la zone arrière (5) du chariot de courses (1), la partie pivotante (26) étant montée sur le cadre roulant (2) de manière à pouvoir pivoter sur un axe horizontal (29) et la partie de réception (30) venant en appui avec sa portion avant (32) sur les supports (12) en étant guidée de manière coulissante sur un guide (12') et étant reliée avec sa zone arrière (31) à la partie pivotante (26) de manière à pouvoir pivoter sur un axe horizontal (33), la partie de réception (30) étant bloquée avec sa portion avant (32) de manière amovible dans la position de non-utilisation afin de l'empêcher de coulisser horizontalement,
le guide (12') étant formé par une glissière pourvue d'un évidement (40) en forme de V
et le système de blocage (40) étant à complémentarité de formes,
**caractérisé en ce que**
la portion avant (32) de la partie de réception (30), sauf dans la position d'utilisation du réceptacle (25), prend appui sur le guide (12') de manière à pouvoir être soulevée et le guide (12') est disposé au-dessus de la portion inférieure horizontale (13).

2. Chariot de courses empilable selon la revendication 1, **caractérisé en ce que** le système de blocage (40) est formé par un coulisseau et/ou un galet sur la portion avant (32) de la partie de réception (30) qui tombe dans l'évidement (40) dans la position de non-utilisation.

3. Chariot de courses empilable selon l'une des revendications précédentes, **caractérisé en ce que** l'espace disponible pour soulever la portion avant (32) est limité vers le bas et vers l'arrière par les supports (12) et vers le haut par le panier (6).

4. Chariot de courses empilable selon l'une des revendications précédentes, **caractérisé en ce que** les supports (12) forment une butée destinée à la partie de réception (30) dans la position d'utilisation du réceptacle (25).

5. Chariot de courses empilable selon l'une des revendications précédentes, **caractérisé en ce que**, dans la position d'utilisation du réceptacle (25), la portion avant (32) de la partie de réception (30) est en retrait, d'une distance (A), du bord inférieur arrière (7) du panier (6).

6. Chariot de courses empilable selon l'une des revendications précédentes, **caractérisé en ce que** la largeur de la liaison transversale supérieure (27) de la partie pivotante (26) est choisie de manière que la partie pivotante (26) puisse être déplacée entre les supports (12).

7. Chariot de courses empilable selon l'une des revendications précédentes, **caractérisé en ce que**, lorsque le réceptacle (25) n'est pas utilisé, au moins une partie de la liaison transversale supérieure (27) de la partie pivotante (26) est disposée à l'intérieur du tracé de la partie de réception (30).
